(19) Europäisches Patentamt
European Patent Office
Office européen des brevets

(11) **EP 4 366 003 A1**

(12) **EUROPEAN PATENT APPLICATION**
published in accordance with Art. 153(4) EPC

(43) Date of publication:
**08.05.2024 Bulletin 2024/19**

(21) Application number: **22875688.8**

(22) Date of filing: **29.08.2022**

(51) International Patent Classification (IPC):
***H01M 8/0284*** *(2016.01)* ***C08F 290/04*** *(2006.01)*
***C09K 3/10*** *(2006.01)* ***H01M 8/10*** *(2016.01)*

(52) Cooperative Patent Classification (CPC):
**H01M 8/0284; C08F 290/04; C09D 133/08; C09K 3/10; H01M 8/10;** Y02E 60/50

(86) International application number:
**PCT/JP2022/032441**

(87) International publication number:
**WO 2023/053816 (06.04.2023 Gazette 2023/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.09.2021 JP 2021161124**

(71) Applicant: **Sumitomo Riko Company Limited**
**Komaki-shi, Aichi 485-8550 (JP)**

(72) Inventors:
- **IMAI, Kentaro**
  **Komaki-shi, Aichi 485-8550 (JP)**
- **NIMURA, Yasunori**
  **Komaki-shi, Aichi 485-8550 (JP)**
- **TANIGUCHI, Shota**
  **Komaki-shi, Aichi 485-8550 (JP)**
- **YAMAMOTO, Kenji**
  **Komaki-shi, Aichi 485-8550 (JP)**

(74) Representative: **Becker, Eberhard**
**Becker Kurig & Partner**
**Patentanwälte mbB**
**Bavariastraße 7**
**80336 München (DE)**

(54) **RADICAL-CURABLE SEALING MEMBER FOR FUEL CELLS**

(57) Provided is a radical-curable sealing member for fuel cells that has excellent product durability and suppresses changes in mechanical characteristics caused by heat and hydrolysis (such as reduced stretch and increased hardness caused by embrittlement). A sealing member 4 is a crosslinked product of a radical-curable composition that contains components (A)-(E), there being 0.1-10 parts by mass of component (B) per 100 parts by mass of component (A). (A) A polymer for fuel cell sealing members that has a radical-curable functional group and also has at least one of a urethane linkage and an ester linkage in the molecular chain thereof. (B) A carbodiimide compound that has at least one functional group selected from the group that consists of ether groups, aliphatic hydrocarbon groups that have at least 3 carbons, and alicyclic hydrocarbon groups. (C) A monofunctional (meth)acrylic monomer. (D) A polyfunctional (meth)acrylic monomer. (E) A radical polymerization initiator.

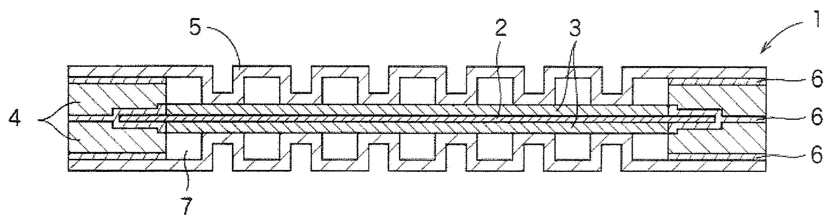


FIG. 1

EP 4 366 003 A1

## Description

[Technical Field]

The present invention relates to a radical-curable sealing member that is used to seal configuration members of fuel cells.

[Background Art]

For members configuring fuel cells, a variety of sealing members are in use. For example, in solid polymer fuel cells for cars, sealing members that secure sealing properties in the peripheries of a membrane electrode assembly (MEA) and a porous layer or between separators are used to prevent the leakage of gas and refrigerant and to keep the inside of the cell in a wet state.

As the sealing members, radical-curable sealing members are preferably used since the productivity thereof is excellent and thickness reduction is possible. As such radical-curable sealing members for fuel cells, a variety of sealing members have been proposed in recent years, and examples thereof include sealing members for which a polymer such as a polyisobutylene polymer or (meth)acrylic polymer having a (meth)acryloyl group in a molecular chain end is used as a polymer therefor (refer to Patent Literature 1 and 2).

Radical-curable sealing members for which the above-described specific polymer is used are excellent in terms of flexibility, stretch or the like in a wide temperature range of high temperatures to low temperatures.

In addition, in the above-described uses, there has been a demand for a rapid cross-linking reaction, high radical curability and the like, which makes the radical-curable sealing members superior in terms of productivity and the like. Therefore, as the polymer, polymers having a urethane linkage or an ester linkage in the molecular chain are preferably used.

[Citation List]

[Patent Literature]

[Patent Literature 1]
PCT International Publication No. WO 2017/029978
[Patent Literature 2]
Japanese Patent Laid-Open No. 2019-155491

[Summary of Invention]

[Technical Problem]

However, polymers having a urethane linkage or an ester linkage in the molecular chain as described above have disadvantages of being weak with respect to heat and liable to hydrolysis. When such thermal degradation or hydrolysis occurs, a problem of the fuel cell sealing members being reduced in hardness or stretch or being likely to collapse is caused.

In addition, water is generated during the power generation reactions of fuel cells, which makes fuel cell sealing members be exposed to warm water at all times. Therefore, fuel cell sealing members are particularly required to have severe hydrolysis resistance.

The present invention has been made in consideration of such circumstances and provides a radical-curable sealing member for fuel cells that has excellent product durability and suppresses changes in mechanical properties caused by heat and hydrolysis (such as reduced stretch and increased hardness caused by embrittlement).

[Solution to Problem]

The present inventors repeated intensive studies to solve the above-described problem. As a result, it was found that, when a crosslinked product composed of a composition obtained by blending (B) a specific carbodiimide compound, that is, a carbodiimide compound having specific functional groups, such as an ether group, an aliphatic hydrocarbon group having at least 3 carbons, and an alicyclic hydrocarbon group, in a specific proportion with (A) a polymer for fuel cell sealing members that has a radical-curable functional group, such as a (meth)acryloyl group, and

has at least one of a urethane linkage and an ester linkage in the molecular chain and, furthermore, blending in (C) a monofunctional (meth)acrylic monomer, (D) a polyfunctional (meth)acrylic monomer, and (E) a radical polymerization initiator in predetermined proportions is used as a radical-curable sealing member for fuel cells, surprisingly, changes in mechanical properties caused by heat and hydrolysis are suppressed, and a product durability improvement effect can be significantly obtained.

A main reason for obtaining the above-described action and effect is considered to be that, when the urethane linkage or the ester linkage in the molecular chain of (A) the polymer for fuel cell sealing members has been ruptured due to heat and hydrolysis, (B) the specific carbodiimide compound exhibits an action of repairing a ruptured place.

In the case of using a carbodiimide compound other than the above-described carbodiimide compound, it has been clarified as a result of experiments that such an action is not exhibited or flexibility or stretch is impaired (the curability of a crosslinked substance becomes high) and desired product durability cannot be obtained or the sealing properties are poor.

That is, the gist of the present invention is the following [1] to [4].

[1] A radical-curable sealing member for fuel cells composed of a crosslinked product of a radical-curable composition that contains components (A)-(E), there being 0.1-10 parts by mass of component (B) per 100 parts by mass of component (A).

(A) A polymer for fuel cell sealing members that has a radical-curable functional group and also has at least one of a urethane linkage and an ester linkage in a molecular chain thereof.
(B) A carbodiimide compound that has at least one functional group selected from the group that consists of ether groups, aliphatic hydrocarbon groups that have at least 3 carbons, and alicyclic hydrocarbon groups.
(C) A monofunctional (meth)acrylic monomer.
(D) A polyfunctional (meth)acrylic monomer.
(E) A radical polymerization initiator.

[2] The radical-curable sealing member for fuel cells according to [1], in which the radical-curable functional group in the component (A) is a (meth)acryloyl group.
[3] The radical-curable sealing member for fuel cells according to [1] or [2], in which the radical-curable functional group in the component (A) is present at a molecular chain end of the component (A).
[4] The radical-curable sealing member for fuel cells according to any one of [1] to [3], in which a main chain of the component (A) is at least one selected from the group that consists of poly(meth)acrylates and polyolefins.

[Advantageous Effects of Invention]

The radical-curable sealing member for fuel cells of the present invention becomes excellent in terms of product durability since changes in mechanical properties caused by heat and hydrolysis (such as reduced stretch and increased hardness caused by embrittlement) are suppressed. Therefore, the radical-curable sealing member for fuel cells is capable of exhibiting excellent performance as a sealing member for fuel cells.

[Brief Description of Drawings]

Fig. 1 is a cross-sectional view showing an example of a sealed product produced using a radical-curable sealing member for fuel cells of the present invention.

[Description of Embodiments]

Hereinafter, an embodiment of the present invention will be described in detail. However, the present invention is not limited to this embodiment.

In the present specification, "(meth)acrylic" is a term used as a concept including both acryl and methacryl, "(meth)acrylate" is a term used as a concept including both an acrylate and a methacrylate, and "(meth)acryloyl group" is a term used as a concept including both an acryloyl group and a methacryloyl group. In addition, "polymer" is a term used as a concept including a copolymer and an oligomer.

A radical-curable sealing member for fuel cells that is an embodiment of the present invention (hereinafter, referred to as "the present sealing member" in some cases) is, as described previously, composed of a crosslinked product of a radical-curable composition that contains the following components (A)-(E), there being 0.1-10 parts by mass of component (B) per 100 parts by mass of the component (A).

(A) A polymer for fuel cell sealing members that has a radical-curable functional group and also has at least one of a urethane linkage and an ester linkage in a molecular chain thereof.
(B) A carbodiimide compound that has at least one functional group selected from the group that consists of ether groups, aliphatic hydrocarbon groups that have at least 3 carbons, and alicyclic hydrocarbon groups.
(C) A monofunctional (meth)acrylic monomer.
(D) A polyfunctional (meth)acrylic monomer.
(E) A radical polymerization initiator.

Hereinafter, each component material that is used in the present sealing member will be described in detail.

<Component (A)>

The component (A) is a polymer for fuel cell sealing members that has a radical-curable functional group and also has at least one of a urethane linkage and an ester linkage in a molecular chain thereof (in a main chain or in a side chain). The component (A) is a main component of the radical-curable composition, which is the material of the present sealing member, and normally accounts for the majority of the entire composition.

Here, "polymer for fuel cell sealing members" refers to a polymer having excellent water resistance and not including any foreign substances that impair power generation, which are properties required for fuel cell sealing members. Examples of such a polymer include polymers containing, for example, a poly(meth)acrylate, a polyolefin, a polysiloxane or the like as a main chain. These may be singly used or two or more may be jointly used. Among these, poly(meth)acrylates and polyolefins are preferably used, and poly(meth)acrylates are more preferably used since the mechanical properties are excellent.

In a case where the main chain of the component (A) is a (meth)acrylate, the main chain is composed of a homopolymer or copolymer of one or more (meth)acrylic monomers or a copolymer of one or more (meth)acrylic monomers and a vinyl-based monomer that can be copolymerized with the (meth)acrylic monomer.

Examples of the (meth)acrylic monomer include (meth)acrylic acid, methyl (meth)acrylate, ethyl (meth)acrylate, n-propyl (meth)acrylate, isopropyl (meth)acrylate, n-butyl (meth)acrylate, isobutyl (meth)acrylate, t-butyl (meth)acrylate, n-pentyl (meth)acrylate, isoamyl (meth)acrylate, n-hexyl (meth)acrylate, cyclohexyl (meth)acrylate, n-heptyl (meth)acrylate, n-octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, stearyl (meth)acrylate, isostearyl (meth)acrylate, oleyl (meth)acrylate, behenyl (meth)acrylate, 2-decyltetradecanyl (meth)acrylate, phenyl (meth)acrylate, toluyl (meth)acrylate, tolyl (meth)acrylate, 4-t-butylcyclohexyl (meth)acrylate, dicyclopentenyl (meth)acrylate, dicyclopentenyloxyethyl (meth)acrylate, dicyclopentanyl (meth)acrylate, dicyclopentanyloxyethyl (meth)acrylate, isobornyl (meth)acrylate, and the like. These may be used singly or a plurality of the (meth)acrylic monomers may be copolymerized.

In addition, the (meth)acrylic monomer may be copolymerized or, furthermore, block-copolymerized with a different monomer. Examples of the monomer that is copolymerized include styrene-based monomers such as styrene, fluorine-containing vinyl monomers such as perfluoroethylene, silicon-containing vinyl-based monomers such as vinyltrimethoxysilane, nitrile group-containing vinyl-based monomers such as acrylonitrile and methacrylonitrile, amide group-containing vinyl monomers such as acrylamide and methacrylamide, and the like.

Among these, (meth)acrylate ester monomers such as ethyl (meth)acrylate, n-butyl (meth)acrylate, 2-ethylhexyl (meth)acrylate, and stearyl (meth)acrylate are preferable, and acrylate ester monomers in which an ester group has 2-14 carbon atoms and methacrylate ester monomers in which an ester group has 8-14 carbon atoms are more preferable. When the number of carbon atoms in the ester group is outside the above-described range, a tendency of the compression set being poor at low temperatures is shown. In addition, particularly, when the number of carbon atoms is above the above-described range, the reactivity during polymerization becomes poor, and a tendency of the monomer becoming hard to synthesize is shown.

Incidentally, in a case where the main chain of the component (A) is a polyolefin, the main chain can be obtained by polymerizing an olefin or diolefin having a relatively low molecular weight such as ethylene, propylene butene, butadiene, isobutylene, or isoprene. Among these, the main chain is preferably polybutadiene or polyisobutylene due to its excellent flexibility and mechanical properties.

The polyolefin may be partially copolymerized or, furthermore, block-copolymerized with a different monomer. Examples of the monomer that is copolymerized include styrene-based monomers, vinyl-based monomers, allyl-based monomers, and the like.

In addition, since the component (A) needs to have at least one of a urethane linkage and an ester linkage in the molecular chain, for example, in a case where a urethane linkage is imparted, this linkage can be introduced into the molecular chain of the component (A) by polymerizing an olefin having a hydroxyl group with the main chain and,

furthermore, reacting a (meth)acrylate ester having an isocyanate group as described in Japanese Patent Laid-Open No. 2007-211240. In addition, in a case where an ester linkage is imparted, there are a variety of methods, and this linkage can be introduced into the molecular chain of the component (A) by, for example, imparting a structure having a radical-polymerizable reactive group such as acrylate ester and an ester group using a Friedel-Crafts reaction.

In addition, the component (A) is a polymer having a radical-curable functional group. In addition, the component (A) has excellent radical curability and is thus preferably a polymer having a radical-curable functional group at a molecular chain end thereof and more preferably a polymer having radical-curable functional groups at both ends of a molecular chain thereof.

Furthermore, the average number of the radical-curable functional groups that are introduced per molecule of the component (A) is preferably 1.5-4 and more preferably 1.7-2.3.

Here, examples of the radical-curable functional group include a (meth)acryloyl group, a vinyl group, an allyl group, and the like. These may be singly used or two or more may be jointly used. Among these, a polymer having a (meth)acryloyl group is preferable due to its excellent reactivity.

How to introduce the (meth)acryloyl group into the molecular chain end of the polymer, which serves as the main chain, varies with a synthesis method; however, basically, a reactive group is imparted to an end of a polymer that serves as the main chain, and a low-molecular-weight (meth)acrylate ester monomer having a functional group reactive with the imparted reactive group is reacted. Examples of a specific synthesis method include atom transfer radical polymerization, the previously-mentioned Friedel-Crafts reaction, and the like.

The component (A) is preferably a compound represented by the following general formula (1) from the viewpoint of more effectively exhibiting the effect of the present invention.

[Chem. 1]

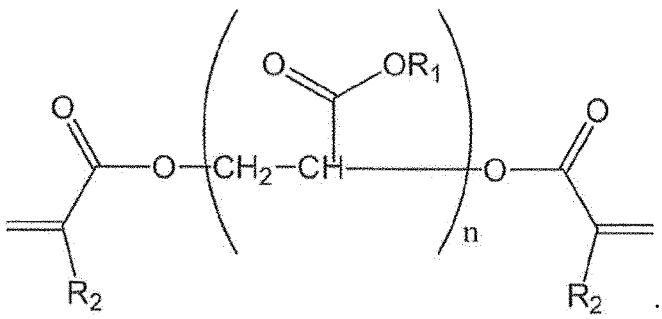

... (1)

(here, in the general formula (1), $R_1$ is a hydrogen atom or an ester residue having 1-20 carbon atoms, $R_2$ is a hydrogen atom or an organic group having 1-20 carbon atoms, and n is an integer of 20-800)

In the general formula (1), the ester residue having 1-20 carbon atoms may be any of a linear residue, a branched residue, and a cyclic residue, and examples thereof include a methyl ester residue, an ethyl ester residue, a n-propyl ester residue, an isopropyl ester residue, a n-butyl ester residue, an isobutyl ester residue, a t-butyl ester residue, a pentyl ester residue, a hexyl ester residue, a heptyl ester residue, an octyl ester residue, a cyclopentyl ester residue, a cyclohexyl ester residue, and the like. Among these, the ester residue is preferably an ester residue having 2-14 carbon atoms. In addition, examples of the organic group in the general formula (1) include unsubstituted or substituted monovalent hydrocarbon groups having 1-20 carbon atoms such as an alkyl group having 1-20 carbon atoms, an alkenyl group having 2-20 carbon atoms, an aryl group having 6-20 carbon atoms, and an aralkyl group having 7-20 carbon atoms, and the like. From the viewpoint of enhancing the reactivity, the organic group is preferably a hydrogen atom or an alkyl group, and, particularly, a hydrogen atom or a methyl group are more preferable. In addition, in the general formula (1), n is 20-800 and, in particular, preferably 50-400.

These components (A) may be used singly or two or more components may be jointly used.

The glass transition temperature (Tg) of the component (A) is not particularly limited, but is, for example, preferably -40°C or lower and more preferably -50°C or lower. When the glass transition temperature (Tg) of the component (A) becomes higher than the above-described temperature, a tendency of the compression set being poor at low temperatures is shown.

The lower limit value is not particularly limited, but is, for example, preferably -100°C.

Such a glass transition temperature (Tg) of the component (A) is measured with a differential scanning calorimeter (DSC). Specifically, using a differential scanning calorimeter (DSC) SSC-5200 manufactured by Seiko Instrument Inc., preliminary adjustment is performed by temporarily heating a specimen up to 200°C at a rate of 25 °C/minute, then, holding the specimen for 10 minutes and lowering the temperature to 50°C at a rate of 25 °C/minute, measurement is

performed while the specimen is heated up to 200°C at a rate of 10 °C/minute, an integral value is obtained from the obtained DSC curve, and the glass transition temperature is obtained from the maximum point.

The number-average molecular weight of the component (A) is, for example, preferably 3000-100000 and more preferably 5000-50000. When the number-average molecular weight (Mn) is smaller than the above-described range, a tendency of the compression cracking resistance being poor is shown, and, when the number-average molecular weight is larger than the above-described range, a tendency of the compression set being poor is shown, and there is a tendency that a high viscosity is developed and the handleability deteriorates.

The molecular weight distribution (weight-average molecular weight (Mw)/number-average molecular weight (Mn)) of the component (A) is preferably 1.1-1.6 and more preferably 1.1-1.4 from the viewpoint of more effectively exhibiting the effect of the present invention.

The number-average molecular weight (Mn) and the weight-average molecular weight (Mw) are measured by gel permeation chromatography (GPC). Specifically, chloroform is used as a mobile phase, measurement is performed in a polystyrene gel column, and the number-average molecular weight and the like can be obtained in terms of polystyrene.

The viscosity (viscosity with a B-type viscometer) at 23°C of the component (A) is preferably 40-5000 Pa·s and more preferably 100-4000 Pa·s from the viewpoint of more effectively exhibiting the effect of the present invention.

In addition, the component (A) can be procured as a commercially available product, and examples thereof include TEAI-1000 (manufactured by Nippon Soda Co., Ltd.), and the like.

<Component (B)>

The carbodiimide compound, which is the component (B), is a carbodiimide compound that has at least one functional group selected from the group that consists of ether groups, aliphatic hydrocarbon groups that have at least 3 carbons, and alicyclic hydrocarbon groups.

Here, examples of the ether groups include alkyl ester groups having 2-8 carbon atoms (preferably 2-4 carbon atoms), and the like.

In addition, the aliphatic hydrocarbon groups that have at least 3 carbons are preferably aliphatic hydrocarbon groups having 2-10 carbon atoms (more preferably 3-5 carbon atoms). Specific examples thereof include a propyl group, a butyl group, a benzyl group, and the like.

In addition, the alicyclic hydrocarbon groups are preferably alicyclic hydrocarbon groups having 3-7 carbon atoms (more preferably having 4-6 carbon atoms). Specific examples thereof include a cyclobutyl group, a cyclopentyl group, a cyclohexyl group, and the like.

In addition, the carbodiimide compound having the functional group is singly used or two or more carbodiimide compounds are jointly used.

In addition, the carbodiimide compound, which is the component (B), is preferably an aromatic carbodiimide compound or an alicyclic carbodiimide compound from the viewpoint of the compatibility with resins.

In addition, the component (B) can be procured as a commercially available product, and examples thereof include CARBODILITE PF04F, CARBODILITE V-02B, ELASTOSTAB H01 (all manufactured by Nisshinbo Chemical Inc.), N,N'-dicyclohexylcarbodiimide, N,N'-di-tert-butylcarbodiimide (all manufactured by Tokyo Chemical Industry Co., Ltd.), and the like.

The content of the component (B) is 0.1-10 parts by mass per 100 parts by mass of the component (A). That is, this is because, when the content of the component (B) is too small, a repair effect when the urethane linkage or the ester linkage in the molecule chain of the component (A) has been ruptured cannot be sufficiently obtained, and, conversely, when the content of the component (B) is too large, the stretch at initial break (Eb) measured according to, for example, JIS K 6251 is poor. In addition, from the viewpoint of further enhancing the effect of the present invention, the content of the component (B) is preferably 0.3-8 parts by mass and more preferably 0.5-5 parts by mass per 100 parts by mass of the component (A).

<Component (C)>

The monofunctional (meth)acrylic monomer, which is the component (C), is a (meth)acrylate compound having one (meth)acryloyl group in the molecular structure. Specific examples thereof include well-known ethylenically unsaturated monofunctional monomers, and examples thereof include (meth)acrylic monomers that can be used as configuration monomers in a case where the main chain of the component (A) is the poly(meth)acrylate. Among them, from the viewpoint of further enhancing the effect of the present invention, alkyl acrylate ester monomers such as dicyclopentenyloxyethyl (meth)acrylate, methyl (meth)acrylate, ethyl (meth)acrylate, n-propyl (meth)acrylate, n-butyl (meth)acrylate, isobutyl (meth)acrylate, t-butyl (meth)acrylate, n-pentyl (meth)acrylate, n-heptyl (meth)acrylate, 2-ethylhexyl (meth)acrylate, n-octyl (meth)acrylate, isooctyl (meth)acrylate, nonyl (meth)acrylate, isononyl (meth)acrylate, decyl (meth)acrylate,

isodecyl acrylate, lauryl (meth)acrylate, tridecyl (meth)acrylate, stearyl (meth)acrylate, isostearyl (meth)acrylate, isobornyl (meth)acrylate, cyclohexyl (meth)acrylate, benzyl (meth)acrylate, phenoxyethyl (meth)acrylate, and tetrahydrofurfuryl (meth)acrylate are preferable. Among these, dicyclopentenyloxyethyl acrylate, n-octyl acrylate, and 2-ethylhexyl acrylate are more preferable.

These components (C) may be used singly or two or more components may be jointly used.

The content of the component (C) is preferably 5-70 parts by mass per 100 parts by mass of the component (A) from the viewpoint of further enhancing the effect of the present invention (particularly, enhancing the flexibility or the like) and more preferably 10-50 parts by mass from the same viewpoint.

The glass transition temperature (Tg) of the component (C) is not particularly limited, but is preferably 20°C or lower and more preferably 10°C or lower. When the glass transition temperature (Tg) of the component (C) becomes higher than the above-described temperature, a tendency of the compression set being poor at low temperatures is shown.

The lower limit value is not particularly limited, but is, for example, preferably -100°C.

Regarding such a glass transition temperature (Tg) of the component (C), a homopolymer of the monofunctional (meth)acrylic monomer, which is the component (C), is measured with a differential scanning calorimeter (DSC) in the same manner as described above.

<Component (D)>

The polyfunctional (meth)acrylic monomer of the component (D) is a (meth)acrylate compound having two or more (meth)acryloyl groups in the molecular structure. Specific examples thereof include well-known ethylenically unsaturated polyfunctional monomers, and examples of a (meth)acrylic monomer having two (meth)acryloyl groups in the molecular structure include alkanediol di(meth)acrylates such as 1,6-hexanediol di(meth)acrylate, 1,8-octanediol di(meth)acrylate, 1,9-nonanediol diol di(meth)acrylate, 1,10-decanediol di(meth)acrylate, 1,12-dodecanediol di(meth)acrylate, 3-methyl-1,5-pentanediol di(meth)acrylate, 2,4-diethyl-1,5-pentanediol di(meth)acrylate, butylethylpropanediol di(meth)acrylate, 3-methyl-1,7-octanediol di(meth)acrylate, 2-methyl-1,8-octanediol di(meth)acrylate, and neopentyl glycol di(meth)acrylate, ethoxylated cyclohexanedimethanol di(meth)acrylate, ethoxylated bisphenol A di(meth)acrylate, tricyclodecanedimethanol di(meth)acrylate, propoxylated ethoxylated bisphenol A di(meth)acrylate, 1,1,1-trishydroxymethylethane di(meth)acrylate, and the like.

Examples of a (meth)acrylic monomer having three or more (meth)acryloyl groups include pentaerythritol acrylate-based compounds having a pentaerythritol structure and a (meth)acrylate structure such as trimethylolpropane tri(meth)acrylate, trimethylolpropane ethoxy tri(meth)acrylate, trimethylolpropanepropoxy tri(meth)acrylate, glycerin propoxy tri(meth)acrylate, tetramethylolmethane tri(meth)acrylate, tetramethylolmethane tetra(meth)acrylate, ditrimethylolpropane tetra(meth)acrylate, monopentaerythritol (meth)acrylate, dipentaerythritol (meth)acrylate, tripentaerythritol (meth)acrylate, and polypentaerythritol (meth)acrylate.

Among these components (D), from the viewpoint of further enhancing the effect of the present invention, alkanediol di(meth)acrylates such as 1,6-hexanediol di(meth)acrylate, 1,8-octanediol di(meth)acrylate, 1,9-nonanediol diol di(meth)acrylate, 1,10-decanediol di(meth)acrylate, 1,12-dodecanediol di(meth)acrylate, 3-methyl-1,5-pentanediol di(meth)acrylate, 2,4-diethyl-1,5-pentanediol di(meth)acrylate, butylethylpropanediol di(meth)acrylate, 3-methyl-1,7-octanediol di(meth)acrylate, 2-methyl-1,8-octanediol di(meth)acrylate, and neopentyl glycol di(meth)acrylate, and pentaerythritol acrylate-based compounds are preferable. Among these, 1,6-hexanediol di(meth)acrylate, 1,9-nonanediol diol di(meth)acrylate, and pentaerythritol acrylate-based compounds are more preferable, and 1,9-nonanediol diol di(meth)acrylate is particularly preferable.

The number of carbon atoms in the molecular chain (main chain) of the polyfunctional (meth)acrylic monomer of the component (D) is preferably six or more. When the number of carbon atoms is less than the above-described numerical value, a tendency of the compression cracking resistance being poor is shown.

These components (D) may be used singly or two or more components may be jointly used. For example, as the pentaerythritol acrylate-based compound, a mixture of tripentaerythritol acrylate, dipentaerythritol acrylate, monopentaerythritol acrylate, and polypentaerythritol acrylate may be used.

The content of the component (D) is preferably 1-20 parts by mass per 100 parts by mass of the component (A) from the viewpoint of further enhancing the effect of the present invention (particularly, enhancing the cross-linking properties or the like) and more preferably 2-10 parts by mass from the same viewpoint.

<Component (E)>

The radical polymerization initiator of the component (E) is not particularly limited as long as the radical polymerization initiator is a compound that generates a radical by being irradiated with energy rays, and examples thereof include benzophenone-type compounds such as benzophenone, 4-methylbenzophenone, 2,4,6-trimethylbenzophenone, methylorthobenzoylbenzoate, and 4-phenylbenzophenone, anthraquinone-type compounds such as t-butylanthraquinone and 2-ethylanthraquinone, alkylphenone-type compounds such as 2-hydroxy-2-methyl-1-phenylpropan-1-one, oligo{2-hydroxy-2-methyl-1-[4-(1-methylvinyl)phenyl]propanone}, benzyldimethylketal, 1-hydroxycyclohexylphenylketone, benzoin methyl ether, 2-methyl-[4-(methylthio)phenyl]-2-morpholino-1-propanone, and 2-hydroxy-1-{ 4-[4-(2-hydroxy-2-methylpropionyl)benzyl] phenyl }-2-methylpropan-1-one, thioxanthone-type compounds such as 2-benzyl-2-dimethylamino-1-(4-morpholinophenyl)-butanone-1, diethylthioxanthone, and isopropylthioxanthone, acylphosphine oxide-type compounds such as 2,4,6-trimethylbenzoyldiphenylphosphine oxide, bis(2,6-dimethoxybenzoyl)-2,4,4-trimethylpentylphosphine oxide, and bis(2,4,6-trimethylbenzoyl)-phenylphosphine oxide, phenylglyoxylate-type compounds such as phenylglyoxylic acid methyl ester and the like. Among these, from the viewpoint of excellent reactivity, alkylphenone-type compounds are preferable, and, specifically, 1-hydroxycyclohexylphenylketone and the like are preferable.

These components (E) may be used singly or two or more components may be jointly used.

The content of the component (E) is preferably 0.01-10 parts by mass per 100 parts by mass of the component (A) from the viewpoint of further enhancing the effect of the present invention and more preferably 0.1-5 parts by mass from the same viewpoint.

<Thickener component>

Aside from the components (A)-(E), a filler, a fatty acid amide or the like is blended with the radical-curable composition, which is the material of the present sealing member, as a thickener component as necessary. That is, these thickener components become useful when there is a need to increase the viscosity of the composition at the time of manufacturing the present sealing member.

The filler is not particularly limited, examples thereof include silica, carbon black, calcium carbonate, titanium oxide, talc, clay, glass balloon, and the like, and, among these, silica is preferable. In addition, from the viewpoint of improving dispersibility, silica hydrophobilized with a surface treatment agent is more preferable. As the silica hydrophobilized with a surface treatment agent, for example, silica surface-treated with a silane compound is preferable, dimethylsilylated silica surface-treated with dimethylsilane, trimethylsilylated silica surface-treated with trimethylsilane, octylsilylated silica surface-treated with octylsilane, and methacrylsilylated silica surface-treated with methacryloxysilane are more preferable, and, among these, particularly, trimethylsilylated silica and methacrylsilylated silica are more preferable.

These thickener components may be used singly or two or more components may be jointly used.

In the case of containing the thickener component, the content thereof is normally 0.1-50 parts by mass per 100 parts by mass of the component (A). When the content of the thickener component is too large, there is a tendency that a high viscosity is developed and the handleability deteriorates, that is, the deterioration of mechanical properties is caused.

<Variety of additives>

Aside from the components (A)-(E) or the thickener component, a variety of additives such as an antiaging agent, a compatibilizer, a curability modifier, a lubricant, a pigment, an antifoaming agent, a foaming agent, a light stabilizer, and a surface modifier may be blended with the radical-curable composition, which is the material of the present sealing member, to an extent that the effect of the present invention is not impaired.

The radical-curable composition desirably does not contain an amine, sulfur, and a phosphorus-based material since there is a concern that the power generation of fuel cells may be impaired or platinum catalysts in fuel cells may be contaminated.

<Method for producing radical-curable composition>

The radical-curable composition, which is the material of the present sealing member, is produced by adding the components (A)-(E) or other components and mixing and stirring the components using a mixer such as a planetary mixer.

<Curing method>

The radical-curable composition is cured with active energy rays such as electron beams or ultraviolet rays. Among these, ultraviolet rays that damage base materials only to a small extent are preferable. An active energy source is not particularly limited, well-known sources can be used, and, for example, a high-pressure mercury lamp, a black light, LED, a fluorescent lamp, and the like can be preferably used.

The glass transition temperature (Tg) of the present sealing member composed of a crosslinked product of the radical-curable composition is preferably -10°C or lower and more preferably -30°C or lower from the viewpoint of further enhancing the effect of the present invention.

The lower limit value is not particularly limited, but is, for example, preferably -100°C.
Such a glass transition temperature (Tg) is measured with a differential scanning calorimeter (DSC) in the same manner as described above.

<Sealing method>

As a method for sealing the radical-curable composition, for example, the radical-curable composition may be applied to a configuration member of a fuel cell and cured by being irradiated with active energy rays. As an application method, for example, a variety of methods such as dispensing, spraying, inkjet, and screen printing can be used. More specifically, sealing methods such as form-in-place gasket (FIPG), cure-in-place gasket (CIPG), and mold-in-place gasket (MIPG) can be used.
Since the radical-curable composition can be crosslinked within a short time (for example, approximately several tens of seconds), when configuration members of fuel cells are sealed using the radical-curable composition by the above-described sealing method, the productivity becomes excellent. In addition, the present sealing member is easily made into a membrane-like sealing member, and the thickness reduction of the sealing member makes it possible to realize the size reduction of fuel cells. Specifically, it is easy to make, for example, the thickness of a membrane-like sealing member to be 50-1000 μm, which makes it possible to realize the size reduction of fuel cells. Furthermore, the present sealing member is excellent in terms of flexibility, stretch or the like in a wide temperature range of high temperatures to low temperatures and can be made into a radical-curable sealing member for fuel cells that has excellent product durability and suppresses changes in mechanical properties caused by heat and hydrolysis (such as reduced stretch and increased hardness caused by embrittlement).

<Uses>

The present sealing member composed of a crosslinked product of the radical-curable composition is used as a configuration member of fuel cells. Particularly, the present sealing member is suitably used in fuel cells requiring sealing properties in a wide temperature range due to the use in cold districts or the like.

<Production of present sealing member (radical-curable sealing member for fuel cells)>

The present sealing member can be produced by preparing a composition containing the components (A)-(E) and the thickener component or the like as necessary, then, applying the composition to a variety of configuration members, such as a separator of a fuel cell, using a dispenser or the like and curing the composition by irradiating the composition with active energy rays.
In addition, the present sealing member can also be produced by applying the radical-curable composition to the surfaces of a variety of configuration members of a fuel cell to which an adhesive has been already applied and curing the radical-curable composition by irradiating the composition with active energy rays. Furthermore, the present sealing member can also be molded into predetermined shapes depending on the shapes of parts to be sealed in a variety of configuration members of a fuel cell. For example, when the present sealing member is molded into a film shape, the sealing members can be pasted to a variety of configuration members of a fuel cell with an adhesive and used.
Configuration members of fuel cells that are sealed with the present sealing member vary with the kinds, structures, and the like of fuel cells, and examples thereof include separators (metal separators, carbon separators, and the like), gas diffusion layers, MEA (electrolyte membranes, electrodes), and the like.
An example of a sealed product produced using the present sealing member is shown in Fig. 1. Fig. 1 mainly shows a single cell 1 in a fuel cell produced by laminating a plurality of cells, and the cell 1 includes MEA 2, a gas diffusion layer 3, sealing members 4, separators 5 and adhesive layers 6. In addition, the sealing members 4 are the present sealing member.
In addition, as configuration members for a fuel cell, for example, the separator 5 and the sealing member 4 may be made to adhere together through the adhesive layer 6, the separator 5 and the sealing member 4 having self-adhesiveness may be made to adhere together, or the like.
While not shown, MEA 2 is composed of an electrolyte membrane and a pair of electrodes disposed on both sides of the electrolyte membrane in the lamination direction. The electrolyte membrane and the pair of electrodes have a rectangular thin plate shape. The gas diffusion layer 3 is disposed on both sides of MEA 2 in the lamination direction. The gas diffusion layer 3 is a porous layer and has a rectangular thin plate shape.
The separator 5 is preferably a carbon separator or a metal separator, and, from the viewpoint of conduction reliability, a metal separator having a carbon thin film such as a diamondlike carbon film (DLC film) or a graphite film is particularly preferable. The separator 5 has a rectangular thin plate shape and is provided with a number of grooves extending in the longitudinal direction. These grooves make the cross section of the separator 5 have a projected and

recessed shape. The separators 5 are disposed to face each other on both sides of the gas diffusion layer 3 in the lamination direction. Between the gas diffusion layer 3 and the separators 5, gas flow paths 7 for supplying gas to the electrodes are provided to be divided using the projected and recessed shape.

The sealing member 4 has a rectangular frame shape. In addition, the sealing members 4 are made to adhere to the peripheral part of MEA 2 or the gas diffusion layer 3 and the separators 5 through the adhesive layers 6 and seal the peripheral part of MEA 2 or the gas diffusion layer 3.

In the example of Fig. 1, vertically-divided two members are used as the sealing members 4, but it is also possible to use a single sealing member obtained by combining both.

As a material for forming the adhesive layer 6, for example, a rubber paste, a rubber composition that is liquid at normal temperature (23°C), a primer, or the like is used. Examples of a method for applying the material include dispenser application and the like, and it is normal to apply the material under a condition of normal temperature. The thickness of the adhesive layer 6 is normally 0.01-1 mm in the case of using the liquid-form rubber composition.

During the operation of fuel cells such as solid polymer fuel cells, a fuel gas and an oxidant gas are each supplied through the gas flow paths 7. Here, the peripheral part of MEA 2 is sealed with the sealing members 4 through the adhesive layers 6. Therefore, the gases do not mix or leak.

Examples

Hereinafter, examples will be jointly described with comparative examples. However, the present invention is not limited to these examples within the scope of the gist.

First, prior to the examples and the comparative examples, materials to be described below were prepared.

Each numerical value (measured value or the like) shown for each material is a value obtained according to a standard described previously.

<Component (A)>

Acryloyl group-terminated polyacrylate A1 (synthesis example of acryloyl group-terminated polyacrylate having an ester linkage in the molecular chain):

According to a well-known method (for example, described in Japanese Patent Laid-Open No. 2012-211216), copper (I) bromide was used as a catalyst, pentamethyldiethylenetriamine was used as a ligand, and diethyl-2,5-dibromoadipate was used as a radical polymerization initiator. As acrylic monomers, 2-ethylhexyl acrylate/n-butyl acrylate (50 parts by mass/50 parts by mass) were used and polymerized with an acrylic monomer/radical polymerization initiator ratio (mole ratio) set to 180, thereby obtaining a terminal bromine group 2-ethylhexyl acrylate/n-butyl acrylate copolymer. This polymer was dissolved in N-dimethylacetamide, potassium acrylate was added thereto, and the components were heated and stirred at 70°C in a nitrogen atmosphere. N,N-dimethylacetamide in this liquid mixture was distilled away under reduced pressure, then, butyl acetate was added to a residue, and an insoluble matter was removed by filtration. Butyl acetate in a filtrate was distilled away under reduced pressure to obtain a 2-ethylhexyl acrylate/n-butyl acrylate copolymer [A1] having an acryloyl group at an end. Regarding A1, the number-average molecular weight was 23000, the molecular weight distribution was 1.1, and the average number of acryloyl groups introduced per molecule of A1 was approximately 1.9. In addition, the glass transition temperature (Tg) of A1 was -50°C.

Acryloyl group-terminated polybutadiene A2 (commercially available product of acryloyl group-terminated polybutadiene having a urethane linkage in the molecular chain):

TEAI-1000 (manufactured by Nippon Soda Co., Ltd.) was prepared.

Acryloyl group-terminated polyisobutylene A3 (synthesis example of acryloyl group-terminated polyisobutylene having an ester linkage in the molecular chain):

According to a well-known method (for example, described in Japanese Patent No. 6088972), the inside of the container of a 5 L separable flask was substituted with nitrogen, and 280 mL of n-hexane (which had been dried with molecular sieves) and 2500 mL of butyl chloride (which had been dried with molecular sieves) were added thereto and cooled to -70°C while being stirred in a nitrogen atmosphere. Next, 1008 mL (10.7 mol) of isobutylene, 27.4 g (0.119 mol) of p-dicumylchloride, and 1.33 g (0.014 mol) of $\alpha$-picoline were added thereto. After a reaction mixture was cooled to -70°C, 5.2 mL (0.047 mol) of titanium tetrachloride was added thereto, and polymerization was initiated. After the initiation of the polymerization, the concentration of residual isobutylene was measured by gas chromatography, and approximately 200 g of methanol was added thereto at a stage where the amount of the residual isobutylene reached less than 0.5%. After the solvent or the like was distilled away from a reaction solution, a product was dissolved in 2 L of n-hexane and washed with 1 L of pure water three times. The solvent was distilled away under reduced pressure, and an obtained polymer was dried in a vacuum at 80°C for 24 hours, thereby obtaining a chlorine-terminated polyisobutylene-based polymer. Next, 100 g of the obtained chlorine-terminated polyisobutylene-based polymer, 540 mL of butyl chloride, 60 mL of n-hexane, and 15.2 g of 2-phenoxyethyl acrylate were put into a 1 L separable flask and cooled to -70°C while

being stirred. After the components were completely cooled to -70°C or lower, 22 mL of titanium tetrachloride was added thereto. After that, while the components were continuously stirred at -70°C for six hours, 200 mL of methanol was added thereto, and the reaction was stopped. A supernatant was fractionated from the reaction solution, the solvent or the like was distilled away, then, a product was dissolved in 650 mL of n-hexane, washed with 500 mL of pure water three times and reprecipitated from methanol, then, the solvent was distilled away under reduced pressure, and an obtained polymer was dried in a vacuum at 80°C for 24 hours, thereby obtaining a target acryloyl group-terminated polyisobutylene-based polymer (acryloyl group-terminated polyisobutylene [A3] having an ester linkage in the molecular chain). Regarding A3, the number-average molecular weight was 5400, the molecular weight distribution was 1.11, and the average number of acryloyl groups introduced per molecule of A3 was 1.93. In addition, the glass transition temperature (Tg) of A3 was -70°C.

<Component (B)>

CARBODILITE PF04F (manufactured by Nisshinbo Chemical Inc., aromatic carbodiimide compound having an ether group)
CARBODILITE V-02B (manufactured by Nisshinbo Chemical Inc., alicyclic carbodiimide compound having an ether group)
ELASTOSTAB H01 (manufactured by Nisshinbo Chemical Inc., aromatic carbodiimide compound having an ether group)
N,N'-Dicyclohexylcarbodiimide (manufactured by Tokyo Chemical Industry Co., Ltd., alicyclic carbodiimide compound)
N,N'-Di-tert-butylcarbodiimide (manufactured by Tokyo Chemical Industry Co., Ltd., carbodiimide compound having an aliphatic hydrocarbon group having 3 or more carbon atoms)

<Carbodiimide compound other than component (B)>

1,3-Di-p-tolylcarbodiimide (manufactured by Sigma-Aldridge, aromatic carbodiimide compound)

<Component (C)>

Dicyclopentenyloxyethyl acrylate (Tg: 10-15°C, manufactured by Hitachi Chemical Company, Ltd.)
2-ethylhexyl acrylate (Tg: -70°C, manufactured by Mitsubishi Chemical Corporation)
n-Octyl acrylate (Tg: -65°C, manufactured by Osaka Organic Chemical Industry Ltd.)

<Component (D)>

1,9-Nonanediol diacrylate (manufactured by Osaka Organic Chemical Industry Ltd.)

<Component (E)>

Omnirad 184 (manufactured by IGM Resins, 1-hydroxycyclohexylphenylketone)

<Thickener component>

AEROSIL RM 50 (manufactured by Nippon Aerosil Co., Ltd., silica)
FLOWNON RCM300TL (manufactured by Kyoeisha Chemical Co., Ltd., fatty acid amide)

[Examples 1-13 and Comparative Examples 1-5]

(Production of radical-curable sealing member for fuel cells (test sample))

Each component shown in Table 1 and Table 2 below was blended in a proportion shown in the same tables

and kneaded with a planetary mixer (manufactured by Inoue Mfg., Inc.), thereby preparing a radical-curable composition.

Subsequently, the radical-curable composition was applied in a predetermined thickness with a bar coater and radiated with ultraviolet rays (irradiation intensity: 250 mW/$cm^2$, accumulated light intensity: 3000 mJ/$cm^2$) with a high-pressure mercury UV irradiator (manufactured by Heraeus Holding, F600V-10), thereby obtaining a test sample having a thickness of 1 mm.

Regarding each test sample obtained as described above, each property was evaluated according to the following standards. The results are collectively shown in Table 1 and Table 2.

<<Hardness>>

The initial hardness of the above-produced test sample was measured using a micro rubber hardness meter (MD-1 type-A, manufactured by Kobunshi Keiki Co., Ltd., measurement mode: peak hold mode) in an atmosphere (23°C).

In addition, the above-produced test sample was placed still in pure water at 120°C for 1000 hours (after endurance), and the hardness (hardness after endurance) was measured in the same manner as described above.

In addition, the hardness after endurance was evaluated according to the following standards.

◎ (excellent): The MD-1 hardness value is 85 or less.
O (very good): The MD-1 hardness value is more than 85 and 95 or less.
X (poor): The MD-1 hardness value is more than 95.

<<Stretch at initial break>>

The stretch at initial break (Eb) of the above-produced test sample was measured according to JIS K 6251 in an atmosphere (23°C).

In addition, the stretch at initial break was evaluated according to the following standards.

O (very good): The Eb value is 100% or more.
X (poor): The Eb value is less than 100%.

<<Reduction rate of stretch at break after endurance>>

After the above-produced test sample was placed still in pure water at 120°C for 1000 hours (after endurance), the stretch at break (Eb') was measured according to JIS K 6251 in an atmosphere (23°C). Subsequently, the reduction rate (ΔEb) of the stretch at break after endurance measured as described above with respect to the stretch at initial break (Eb) of the test sample measured as described previously was calculated according to the following equation.

$$\Delta Eb = ((Eb - Eb')/Eb) \times 100$$

In addition, the reduction rate of the stretch at break after endurance was evaluated according to the following standards.

O (very good): The ΔEb value is less than 50%.

X (poor): The ΔEb value is 50% or more.

[Table 1]

| (Parts by mass) | | Example | | | | | | | | | | | | |
|---|---|---|---|---|---|---|---|---|---|---|---|---|---|---|
| | | 1 | 2 | 3 | 4 | 5 | 6 | 7 | 8 | 9 | 10 | 11 | 12 | 13 |
| Acryloyl group-terminated polyacrylate A1 | | 100 | 100 | 100 | 100 | 100 | 100 | 100 | 100 | 100 | - | - | 100 | 100 |
| Acryloyl group-terminated polybutadiene A2 | | - | - | - | - | - | - | - | - | - | 100 | - | - | - |
| Acryloyl group-terminated polyisobutylene A3 | | - | - | - | - | - | - | - | - | - | - | 100 | - | - |
| Dicyclopentenyloxyethyl acrylate | | 15 | 15 | 15 | - | - | 15 | 15 | 15 | 15 | 15 | 15 | 15 | 15 |
| 2-Ethylhexyl acrylate | | - | - | - | 15 | - | - | - | - | - | - | - | - | - |
| n-Octyl acrylate | | - | - | - | - | 15 | - | - | - | - | - | - | - | - |
| 1,9-Nonanediol diacrylate | | 5 | 5 | 5 | 5 | 5 | 5 | 5 | 5 | 5 | 5 | 5 | 5 | 5 |
| Omnirad 184 | | 5 | 5 | 5 | 5 | 5 | 5 | 5 | 5 | 5 | 5 | 5 | 5 | 5 |
| CARBODILITE PF04F | | 0.1 | 1 | 10 | 1 | 1 | - | - | - | - | 1 | 1 | 1 | 1 |
| CARBODILITE V-02B | | - | - | - | - | - | 1 | - | - | - | - | - | - | - |
| ELASTOSTAB H01 | | - | - | - | - | - | - | 1 | - | - | - | - | - | - |
| N,N'-Dicyclohexylcarbodiimide | | - | - | - | - | - | - | - | 1 | - | - | - | - | - |
| N,N'-Di-tert-butylcarbodiimide | | - | - | - | - | - | - | - | - | 1 | - | - | - | - |
| 1,3-Di-p-tolylcarbodiimide | | - | - | - | - | - | - | - | - | - | - | - | - | - |
| AEROSIL RM 50 | | - | - | - | - | - | - | - | - | - | - | - | 5 | - |
| FLOWNON RCM300TL | | - | - | - | - | - | - | - | - | - | - | - | - | 1 |
| Hardness | Initial hardness: MD-1 | 60 | 59 | 57 | 26 | 33 | 59 | 58 | 59 | 59 | 57 | 62 | 63 | 60 |
| | Hardness after endurance: MD-1 | 90 | 70 | 65 | 49 | 55 | 83 | 75 | 86 | 88 | 58 | 63 | 72 | 70 |
| | Evaluation | O | ◎ | ◎ | ◎ | ◎ | ◎ | ◎ | O | O | ◎ | ◎ | ◎ | ◎ |
| Stretch at initial break | Eb (%) | 180 | 180 | 190 | 170 | 170 | 180 | 180 | 180 | 180 | 170 | 150 | 170 | 180 |
| | Evaluation | O | O | O | O | O | O | O | O | O | O | O | O | O |

(continued)

| (Parts by mass) | | | | | | | | | | | | | | |
|---|---|---|---|---|---|---|---|---|---|---|---|---|---|---|
| | | Example | | | | | | | | | | | | |
| | | 1 | 2 | 3 | 4 | 5 | 6 | 7 | 8 | 9 | 10 | 11 | 12 | 13 |
| Reduction rate of stretch at break after endurance | Eb' (%) | 120 | 160 | 160 | 160 | 150 | 140 | 160 | 130 | 110 | 150 | 140 | 160 | 160 |
| | ΔEb (%) | 33 | 11 | 16 | 6 | 12 | 22 | 11 | 28 | 39 | 12 | 7 | 6 | 11 |
| | Evaluation | O | O | O | O | O | O | O | O | O | O | O | O | O |

[Table 2]

| (Parts by mass) | | | | | | |
|---|---|---|---|---|---|---|
| | | Comparative Example | | | | |
| | | 1 | 2 | 3 | 4 | 5 |
| Acryloyl group-terminated polyacrylate A1 | | 100 | - | - | 100 | 100 |
| Acryloyl group-terminated polybutadiene A2 | | - | 100 | - | - | - |
| Acryloyl group-terminated polyisobutylene A3 | | - | - | 100 | - | - |
| Dicyclopentenyloxyethyl acrylate | | 15 | 15 | 15 | 15 | 15 |
| 2-Ethylhexyl acrylate | | - | - | - | - | - |
| n-Octyl acrylate | | - | - | - | - | - |
| 1,9-Nonanediol diacrylate | | 5 | 5 | 5 | 5 | 5 |
| Omnirad 184 | | 5 | 5 | 5 | 5 | 5 |
| CARBODILITE PF04F | | - | - | - | 20 | - |
| CARBODILITE V-02B | | - | - | - | - | - |
| ELASTOSTAB H01 | | - | - | - | - | - |
| N,N'-Dicyclohexylcarbodiimide | | - | - | - | - | - |
| N,N'-Di-tert-butylcarbodiimide | | - | - | - | - | - |
| 1,3-Di-p-tolylcarbodiimide | | - | - | - | - | 1 |
| AEROSIL RM 50 | | - | - | - | - | - |
| FLOWNON RCM300TL | | - | - | - | - | - |
| Hardness | Initial hardness: MD-1 | 60 | 58 | 57 | 49 | 61 |
| | Hardness after endurance: MD-1 | 100*1 | 57 | 55 | 49 | 100*1 |
| | Evaluation | X | | | | X |
| Stretch at initial break | Eb (%) | 180 | 170 | 150 | 90 | 180 |
| | Evaluation | O | O | O | X | O |
| Reduction rate of stretch at break after endurance | Eb' (%) | Cracked | 30 | 50 | 80 | 30 |
| | ΔEb (%) | - | 82 | 67 | 11 | 83 |
| | Evaluation | - | X | X | O | X |
| * 1: Measurement upper limit | | | | | | |

From the results of Table 1 and Table 2, it is found that, in all sealing members of the examples satisfying each requirement specified in the present invention, an increase in the hardness after endurance is suppressed and the flexibility (sealing properties) is maintained even after the endurance test. Along with that, it is found that, in all of the sealing members of the examples, the stretch at initial break is high, the reduction rate of the stretch at break after endurance is suppressed at a low level, and thus the product durability is excellent.

In contrast, a sealing member of Comparative Example 1 did not contain the specific carbodiimide compound (B) specified in the present invention, which consequently led to a result of the hardness after endurance exceeding the measurement upper limit (100) of the MD-1 hardness meter, and the sealing member cracked at the time of measuring the stretch at break (Eb') after the endurance test, which led to a result of the stretch at break (Eb') being unmeasurable. Sealing members of Comparative Example 2 and Comparative Example 3 contained polymers different from the polymer of Comparative Example 1, but did not contain the specific carbodiimide compound (B) specified in the present invention as in Comparative Example 1, which led to a result that the reduction rate of the stretch at break after endurance could not be suppressed at a low level. A sealing member of Comparative Example 4 contained the specific carbodiimide

compound (B) specified in the present invention, but the proportion thereof was too large, which led to a result of the stretch at initial break (Eb) being poor. A sealing member of Comparative Example 5 contained an aromatic carbodiimide compound that was not the specific carbodiimide compound (B) specified in the present invention, which led to a result of the hardness after endurance exceeding the measurement upper limit (100) of the MD-1 hardness meter and led to a result that the reduction rate of the stretch at break after endurance could not be suppressed at a low level.

In the examples, specific forms in the present invention have been shown, but the examples are simply examples and shall not be interpreted to limit the present invention. It is intended that a variety of deformations that are clear to a person in the art are within the scope of the present invention.

[Industrial Applicability]

The sealing member of the present invention is used as a member configuring fuel cells and is used, for example, as a fuel cell sealed product obtained by making a fuel cell configuration member, such as a metal separator, and a rubber sealing member that seals the fuel cell configuration member adhere together through an adhesive layer or as the sealing member in the fuel cell sealed product obtained by making the sealing members adhere together through an adhesive layer.

[Reference Signs List]

1 Cell
2 MEA
3 Gas diffusion layer
4 Sealing member
5 Separator
6 Adhesive layer
7 Gas flow path

## Claims

1. A radical-curable sealing member for fuel cells composed of a crosslinked product of a radical-curable composition that contains components (A)-(E), there being 0.1-10 parts by mass of the component (B) per 100 parts by mass of the component (A),

   (A) a polymer for fuel cell sealing members that has a radical-curable functional group and also has at least one of a urethane linkage and an ester linkage in a molecular chain thereof,
   (B) a carbodiimide compound that has at least one functional group selected from a group that consists of ether groups, aliphatic hydrocarbon groups that have at least 3 carbons, and alicyclic hydrocarbon groups,
   (C) a monofunctional (meth)acrylic monomer,
   (D) a polyfunctional (meth)acrylic monomer, and
   (E) a radical polymerization initiator.

2. The radical-curable sealing member for fuel cells according to Claim 1,
   wherein the radical-curable functional group in the component (A) is a (meth)acryloyl group.

3. The radical-curable sealing member for fuel cells according to Claim 1 or 2,
   wherein the radical-curable functional group in the component (A) is present at a molecular chain end of the component (A).

4. The radical-curable sealing member for fuel cells according to any one of Claims 1 to 3,
   wherein a main chain of the component (A) is at least one selected from a group that consists of poly(meth)acrylates and polyolefins.

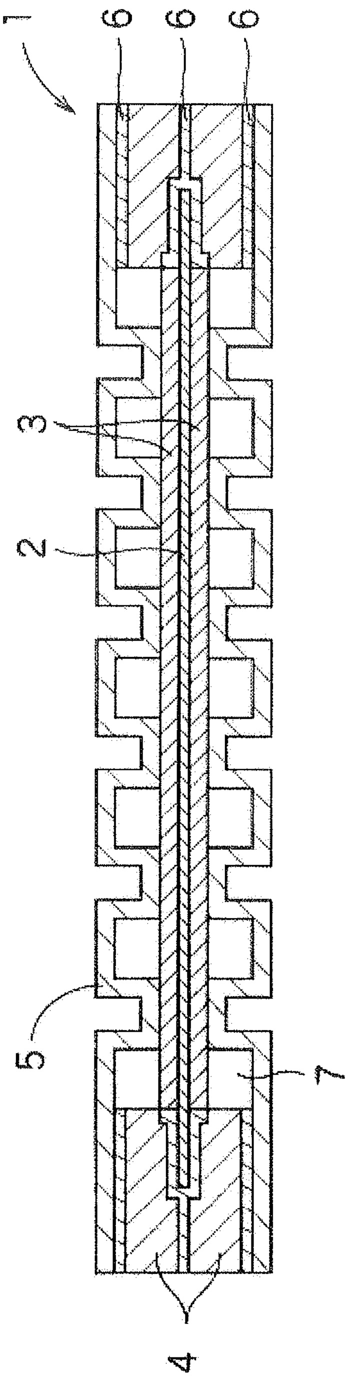


FIG. 1

**INTERNATIONAL SEARCH REPORT**

International application No.
**PCT/JP2022/032441**

**A. CLASSIFICATION OF SUBJECT MATTER**

***H01M 8/0284***(2016.01)i; ***C08F 290/04***(2006.01)i; ***C09K 3/10***(2006.01)i; ***H01M 8/10***(2016.01)i
FI: H01M8/0284; C08F290/04; C09K3/10 E; H01M8/10 101

According to International Patent Classification (IPC) or to both national classification and IPC

**B. FIELDS SEARCHED**

Minimum documentation searched (classification system followed by classification symbols)

H01M8/0284; C08F290/04; C09K3/10; H01M8/10

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2017/029978 A1 (THREE BOND CO LTD) 23 February 2017 (2017-02-23) paragraphs [0019]-[0096], fig. 1-2 | 1-4 |
| A | JP 2014-006325 A (NIPPON KAYAKU CO LTD) 16 January 2014 (2014-01-16) paragraphs [0015]-[0040] | 1-4 |
| A | JP 2016-199669 A (SEKISUI CHEMICAL CO LTD) 01 December 2016 (2016-12-01) paragraphs [0007]-[0099] | 1–4 |

☐ Further documents are listed in the continuation of Box C.   ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **22 September 2022** | **04 October 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/032441**

| Patent document cited in search report | Publication date (day/month/year) | Patent family member(s) | Publication date (day/month/year) |
|---|---|---|---|
| WO 2017/029978 A1 | 23 February 2017 | US 2018/0241056 A1<br>paragraphs [0052]-[0162], fig. 1-2<br>EP 3340352 A1<br>CA 2995835 A1<br>CN 107925098 A<br>KR 10-2018-0041680 A | |
| JP 2014-006325 A | 16 January 2014 | (Family: none) | |
| JP 2016-199669 A | 01 December 2016 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2017029978 A
- JP 2019155491 A
- JP 2007211240 A
- JP 2012211216 A
- JP 6088972 B